# EUROPEAN PATENT APPLICATION

(11) **EP 3 251 563 A1**
(43) Date of publication of application: **06.12.2017**
(21) Application number: 15879624.3
(22) Date of filing: 03.08.2015
(51) Int. Cl.: A47J 27/12

(54) **CORDLESS LIQUID HEATING APPARATUS**

(30) Priority: 28.01.2015 CN 201510045096
(71) Applicant: Guangdong Midea Consumer Electrics Manufacturing Co. Ltd., Foshan, Guangdong 528311 (CN); Midea Group Co., Ltd., Foshan, Guangdong 528311 (CN)
(72) Inventor: CHEN, Weijie, Foshan Guangdong 528311 (CN); ZHU, Guojun, Foshan Guangdong 528311 (CN)
(74) Representative: Lam, Alvin
(86) International application number: PCT/CN2015/085923
(87) International publication number: WO 2016/119425

(57) **Abstract**

Provided is a cordless liquid heating apparatus (1000). The cordless liquid heating apparatus cordless liquid heating apparatus includes a utensil part (100) and a base part (200). The utensil part (100) includes a liquid heating container and a temperature measuring device (110). The base part (200) is configured to supply electric energy to the utensil part (100) through a cordless electric connector, and the base part (200) includes an electronic control device configured to control an electric heater; and a signal electric connection configured to transmit a temperature measured by the temperature measuring device (110) to the electronic control device in the base part (200).

## Description

### FIELD

The present disclosure relates to cordless electric devices, more particularly to a cordless liquid heating apparatus.

### BACKGROUND

In the patent CN00802943.1, a cordless electric connection part and a cordless signal connection part of a cordless liquid heating apparatus form an integral structure. When one of the cordless electric connection part and the cordless signal connection part goes wrong, the whole structure is required to be replaced, which is not conducive to maintenance of the cordless liquid heating apparatus, and results in a high maintenance cost.

### SUMMARY

The present disclosure seeks to solve at least one of the problems existing in the related art to at least some extent. Thus, the present disclosure proposes a cordless liquid heating apparatus, a transmission path of a temperature signal and a transmission path of electric energy of the cordless liquid heating apparatus are separated.

The cordless liquid heating apparatus according to the present disclosure includes a utensil part including a liquid heating container and a temperature measuring device, the liquid heating container including a container for containing a liquid and an electric heater configured to heat the liquid; a base part configured to supply electric energy to the utensil part through a cordless electric connector, the cordless electric connector realizing an electric connection when the utensil part is placed on the base part regardless of a relative angle relation between the utensil part and the base part, the base part including an electronic control device configured to control the electric heater; and a signal electric connection configured to transmit a temperature measured by the temperature measuring device to the electronic control device in the base part, so as to make the electronic control device operate in response to a measured value; in which the signal electric connection and the cordless electric connector configured to transmit the electric energy to the electric heater are separate components.

In the cordless liquid heating apparatus according to the present disclosure, the transmission path of the electric energy and the transmission path of the signal are separated, when one of the cordless electric connector and the signal electric connection goes wrong, only the corresponding one needs to be maintained, thereby facilitating the maintenance of the cordless liquid heating apparatus, and reducing the maintenance cost.

Furthermore, the cordless liquid heating apparatus according to embodiments of the present disclosure may further have the following additional technical features.

In specific embodiments of the present disclosure, the utensil part includes a cordless upper connector for signal transmission, the base part includes a cordless lower connector for signal transmission, and the cordless upper connector for signal transmission and the cordless lower connector for signal transmission define the signal electric connection.

In specific embodiments of the present disclosure, the utensil part includes a cordless upper connector, the base part includes a cordless lower connector, and the cordless upper connector and the cordless lower connector define the cordless electric connector.

According to one embodiment of the present disclosure, the utensil part is rotatable relative to the base part when the utensil part is placed on the base part.

According to one embodiment of the present disclosure, the electric heater is a heating tube or a thick film heater.

According to one embodiment of the present disclosure, the utensil part further includes a power adjusting device connected to the electric heater.

According to one embodiment of the present disclosure, the power adjusting device is a triac.

According to one embodiment of the present disclosure, the base part further includes a user interface connected to the electronic control device.

According to one embodiment of the present disclosure, the cordless upper connector for signal transmission includes a first conductive part and a second conductive part, the temperature measuring device is electrically connected to the first conductive part and the second conductive part through circuits separately, the cordless lower connector for signal transmission includes a third conductive part fitted with the first conductive part and a fourth conductive part fitted with the second conductive part, the first conductive part and the third conductive part are fitted in a form of a protrusion and a groove, and the second conductive part and the fourth conductive part are fitted in a form of a protrusion and a groove.

According to one embodiment of the present disclosure, the cordless upper connector includes three upper conductive parts, and the cordless lower connector includes three lower conductive parts fitted with the three upper conductive parts in one-to-one correspondence.

According to one embodiment of the present disclosure, the temperature measuring device is a temperature transducer.

### BRIEF DESCRIPTION OF THE DRAWINGS

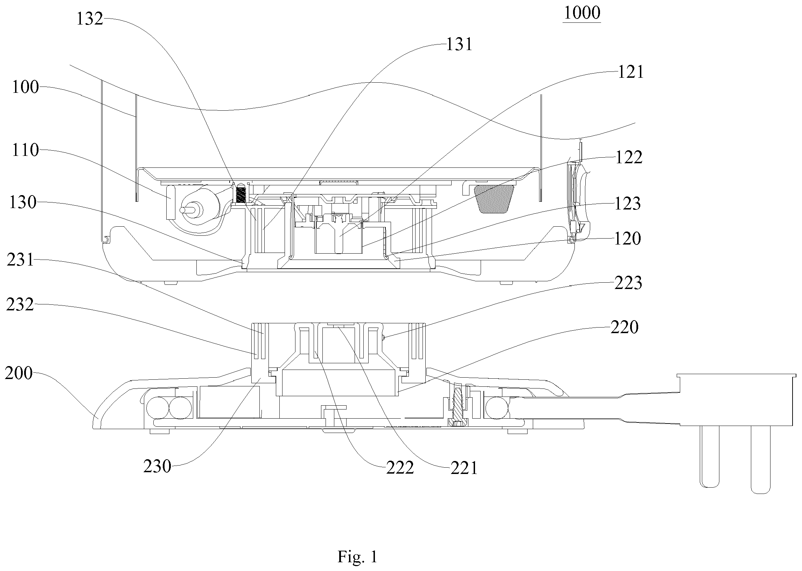

Fig. 1 is a schematic view of a cordless liquid heating apparatus according to an embodiment of the present disclosure.

Reference numerals: cordless liquid heating apparatus 1000, utensil part 100, temperature measuring device 110, cordless upper connector 120, first fitting part 121, second fitting part 122, third fitting part 123, cordless upper connector 130 for signal transmission, first conductive part 131, second conductive part 132, base part 200, cordless lower connector 220, fourth fitting part 221, fifth fitting part 222, sixth fitting part 223, cordless lower connector 230 for signal transmission, third conductive part 231, fourth conductive part 232.

### DETAILED DESCRIPTION

Embodiments of the present disclosure will be described in detail below, and examples of the embodiments are shown in accompanying drawings. The embodiments described herein with reference to drawings are explanatory, illustrative, and used to generally understand the present disclosure. The embodiments shall not be construed to limit the present disclosure.

In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial" and "circumferential" should be construed to refer to the orientation as then described or as shown in the drawings under discussion. These relative terms are for convenience of description and do not require that the present disclosure be constructed or operated in a particular orientation.

In addition, terms such as "first" and "second" are used herein for purposes of description and are not intended to indicate or imply relative importance or significance. Thus, the feature defined with "first" and "second" may comprise one or more of this feature. In the description of the present disclosure, the term "a plurality of" means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements. The above terms can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature. While a first feature "below," "under," or "on bottom of" a second feature may include an embodiment in which the first feature is right or obliquely "below," "under," or "on bottom of" the second feature, or just means that the first feature is at a height lower than that of the second feature.

A cordless liquid heating apparatus 1000 according to embodiments of the present disclosure will be described in detail with reference to Fig. 1, and the cordless liquid heating apparatus 1000 may be household appliances such as a kettle, a coffee pot or the like.

The cordless liquid heating apparatus 1000 according to embodiments of the present disclosure may include a utensil part 100 and a base part 200. The utensil part 100 cooperates with the base part 200 so as to transmit electric energy from the base part 200 to the utensil part 100. The utensil part 100 may be rotated relative to the base part 200 when the utensil part 100 is placed on the base part 200.

As illustrated in Fig. 1, the utensil part 100 may include a liquid heating container and a temperature measuring device 110.

The liquid heating container includes a container configured to contain a liquid (such as, water, coffee, soybean milk or the like) and an electric heater configured to heat the liquid. The electric heater can heat the container after the liquid is put in the container, and can further heat the liquid in the container.

Optionally, the electric heater may be a heating tube or a thick film heater. In a specific example of the present disclosure, the electric heater is the thick film heater.

The temperature measuring device 110 is disposed to the liquid heating container and configured to measure a temperature of the liquid in the container. Optionally, the temperature measuring device 110 is a temperature transducer.

The base part 200 is configured to supply the electric energy to the utensil part 100 through a cordless electric connector, the cordless electric connector realizes an electric connection when the utensil part 100 is placed on the base part 200 regardless of a relative angle relation between the utensil part 100 and the base part 200, and the base part 200 includes an electronic control device configured to control the electric heater. That is to say, when the utensil part 100 is placed on the base part 200, the cordless electric connector can supply the electric energy from the base part 200 to the utensil part 100 regardless of a relative angle between the utensil part 100 and the base part 200. The electronic control device can control an operation state of the electric heater.

The temperature measured by the temperature measuring device 110 is transmitted to a signal electric connection of the electronic control device in the base part 200, so as to make the electronic control device operate in response to a measured value. In other words, when the utensil part 100 is placed on the base part 200, the signal electric connection transmits the temperature measured by the temperature measuring device 110 to the electronic control device, and the electronic control device can control an operation state of the cordless liquid heating apparatus 1000, for example, the operation state of the electric heater, based on a measured temperature value received.

The signal electric connection and the cordless electric connector configured to transmit the electric energy to the electric heater are separate components. That is to say, the signal electric connection and the cordless electric connector are not an integral component.

Specifically, when the utensil part 100 is placed on the base part 200, the cordless electric connector supplies the electric energy from the base part 200 to the utensil part 100. The electric heater can heat the liquid in the container. During heating process, the temperature measuring device 110 can measure the temperature of the liquid in the container, the signal electric connection can transmit the temperature measured by the temperature measuring device 110 to the electronic control device, and the electronic control device can control the operation state of the cordless liquid heating apparatus 1000 based on the measured temperature value received.

The electronic control device may include a microprocessor and a power module. The electronic control device is a control center of the cordless liquid heating apparatus 1000. A temperature signal measured by the temperature measuring device 110 is transmitted to the electronic control device through the signal electric connection, and the electronic control device can control the operation state of the cordless liquid heating apparatus 1000 based on the measured temperature signal. In a specific example of the present disclosure, a temperature can be set in advance in the electronic control device, and the electronic control device can control the electric heater to stop heating when the temperature measuring device 110 measures that the temperature in the container reaches the set temperature.

In the cordless liquid heating apparatus 1000 according to the present disclosure, since the signal electric connection and the cordless electric connector are separate components, the transmission path of the electric energy and the transmission path of the signal are separated, when one of the cordless electric connector and the signal electric connection goes wrong, only the corresponding one needs to be maintained, thereby facilitating the maintenance of the cordless liquid heating apparatus 1000, and reducing the maintenance cost.

Specifically, as illustrated in Fig. 1, the utensil part 100 includes a cordless upper connector 130 for signal transmission, the base part 200 includes a cordless lower connector 230 for signal transmission, and the cordless upper connector 130 for signal transmission and the cordless lower connector 230 for signal transmission define the signal electric connection. That is to say, when the utensil part 100 is placed on the base part 200, the cordless upper connector 130 for signal transmission cooperates with the cordless lower connector 230 for signal transmission to transmit the temperature measured by the temperature measuring device 110 to the electronic control device.

As illustrated in Fig. 1, the utensil part 100 includes a cordless upper connector 120, the base part 200 includes a cordless lower connector 220, and the cordless upper connector 120 and the cordless lower connector 220 define the cordless electric connector. When the utensil part 100 is placed on the base part 200, the cordless upper connector 120 cooperates with the cordless lower connector 220 to supply the electric energy to the utensil part 100.

More specifically, the cordless upper connector 120 is electrically connected to the electric heater. After the utensil part 100 cooperates with the base part 200, the electric energy can be transmitted to the electric heater through the cordless upper connector 120, and the electric energy is converted into thermal energy by the electric heater, so that the liquid in the container can be heated.

The cordless upper connector 130 for signal transmission is electrically connected to the temperature measuring device 110, so that the temperature signal can be transmitted to the cordless upper connector 130 for signal transmission after the temperature measuring device 110 measures the temperature in the container.

The cordless upper connector 120 and the cordless upper connector 130 for signal transmission are separate components. That is to say, the electric energy and the temperature signal are not transmitted by one component, and the transmission paths of the electric energy and the temperature signal are separated.

The base part 200 includes a base, the cordless lower connector 220, the cordless lower connector 230 for signal transmission and the electronic control device (not illustrated). The cordless lower connector 220 and the cordless lower connector 230 for signal transmission are disposed to the base part 200 separately, and the cordless lower connector 220 and the cordless lower connector 230 for signal transmission are electrically connected to the electronic control device.

In addition, the cordless lower connector 220 and the cordless lower connector 230 for signal transmission are separate components. That is to say, the electric energy and the temperature signal are not transmitted by one component, and the transmission paths of the electric energy and the temperature signal are separated.

When the utensil part 100 is placed on the base part 200, the cordless upper connector 120 cooperates with the cordless lower connector 220 to supply the electric energy to the utensil part 100, and the cordless upper connector 130 for signal transmission cooperates with the cordless lower connector 230 for signal transmission to transmit the temperature signal measured by the temperature measuring device 110 to the electronic control device.

An operation process of the cordless liquid heating apparatus 1000 will be briefly described.

First, the utensil part 100 is placed on the base part 200, in which case the cordless upper connector 120 cooperates with the cordless lower connector 220, and the cordless upper connector 130 for signal transmission cooperates with the cordless lower connector 230 for signal transmission. The electric energy can be transmitted to the electric heater through the cordless lower connector 220 and the cordless upper connector 120, the electric energy is converted into the thermal energy by the electric heater, and the liquid in the container can be heated. During the heating process, the temperature measuring device 110 disposed to the liquid heating container can measure the temperature of the liquid in the container, and transmit the measured temperature signal to the electronic control device through the cordless upper connector 130 for signal transmission and the cordless lower connector 230 for signal transmission. The electronic control device can operate in response to the measured temperature signal received. For example, when the temperature signal received by the electronic control device indicates that the temperature of the liquid in the container has reached a pre-set value, the electronic control device can control the electric heater to stop heating. When the temperature signal measured by the electronic control device indicates that the temperature of the liquid in the container does not reach a pre-set temperature value, the electronic control device can control the electric heater to continue heating.

In the cordless liquid heating apparatus 1000 according to embodiments of the present disclosure, the electric energy is transmitted from the base part 200 to the utensil part 100 through the cordless upper connector 120 and the cordless lower connector 220, the temperature signal measured by the temperature measuring device 110 is transmitted to the electronic control device through the cordless upper connector 130 for signal transmission and the cordless lower connector 230 for signal transmission, and the electronic control device operates in response to the signal received. The cordless upper connector 120 and the cordless upper connector 130 for signal transmission are separate components, and the cordless lower connector 220 and the cordless lower connector 230 for signal transmission are separate components, so that the transmission path of the electric energy and the transmission path of the signal are separated, when one of the cordless upper electric connector 120, the cordless upper connector 130 for signal transmission, the cordless lower connector 220, and the cordless lower connector 230 for signal transmission goes wrong, only the corresponding one needs to be maintained, thereby facilitating the maintenance of the cordless liquid heating apparatus 1000, and reducing the maintenance cost.

In some embodiments of the present disclosure, the utensil part 100 further includes a power adjusting device connected to the electric heater. The power adjusting device can adjust power of the electric heater, reducing or increasing the power of the electric heater, so that the cordless liquid heating apparatus 1000 can adapt to a plurality of modes and various emergencies.

Optionally, the power adjusting device is a triac (TRIode AC semiconductor switch). Three ends of the triac are connected to the electronic control device, the electric heater and a live line respectively.

During operation, a user selects a liquid temperature to be reached, or simply set to boil. The electronic control device then provides a signal to the triac so as to supply the electric energy to the electric heater, and the electric heater produces thermal energy to heat the liquid in the container. When the liquid in the container reaches the pre-set temperature, the electronic control device controls the triac to interrupt the energy supplied to the electric heater. When it is measured that there is no liquid in the container and the container is heated, the triac can cut off the energy supplied to the electric heater immediately.

According to some embodiments of the present disclosure, the base part 200 further includes a user interface connected to the electronic control device. The user interface can make it convenient for the user to operate, and can provide selections of the plurality of modes, such as a boiling mode, a sterilization mode, and a custom mode. The user can select a needed mode according to practical requirements.

In some embodiments of the present disclosure, as illustrated in Fig. 1, the cordless upper connector 130 for signal transmission includes a first conductive part 131 and a second conductive part 132, the temperature measuring device 110 is connected to the first conductive part 131 and the second conductive part 132 through circuits separately. The cordless lower connector 230 for signal transmission includes a third conductive part 231 fitted with the first conductive part 131 and a fourth conductive part 232 fitted with the second conductive part 132, the first conductive part 131 and the third conductive part 231 are fitted in a form of a protrusion and a groove, and the second conductive part 132 and the fourth conductive part 232 are fitted in a form of a protrusion and a groove.

In some specific examples of the present disclosure, as illustrated in Fig. 1, the first conductive part 131 and the second conductive part 132 are annular protrusion structures, and the third conductive part 231 and the fourth conductive part 232 are annular groove structures. Hence, when the utensil part 100 is placed on the base part 200, regardless of how many angles the utensil part 100 rotates, the first conductive part 131 always contacts the third conductive part 231, and the second conductive part 132 always contacts the fourth conductive part 232. That is, the utensil part 100 is rotatable relative to the base part 200.

In some embodiments of the present disclosure, the cordless upper connector 120 includes three upper conductive parts, and the cordless lower connector 220 includes three lower conductive parts fitted with the three upper conductive parts in one-to-one correspondence.

Specifically, as illustrated in Fig. 1, the three upper conductive parts of the cordless upper connector 120 are a columnar first fitting part 121, an annular second fitting part 122 and an annular third fitting part 123 respectively. The three lower conductive parts of the cordless lower connector 220 are a through-hole-shaped fourth fitting part 221, a groove-shaped fifth fitting part 222 and a sixth fitting part 223. When the utensil part 100 is placed on the base part 200, the columnar first fitting part 121 is inserted into the through hole and contacts an inner circumferential wall of the through-hole-shaped fourth fitting part 221, the annular second fitting part 122 is inserted into the groove-shaped fifth fitting part 222 and is fitted with the groove-shaped fifth fitting part 222, and the sixth fitting part 223 contacts an inner surface of the third fitting part 123. Thus, the electric energy can be transmitted to the liquid heating container through the cordless lower connector 220 and the cordless upper connector 120.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, without conflicting, various embodiments or examples or features of various embodiments or examples described in the present specification may be combined by those skilled in the art.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A cordless liquid heating apparatus, comprising:
a utensil part comprising a liquid heating container and a temperature measuring device, the liquid heating container comprising a container for containing a liquid and an electric heater configured to heat the liquid;
a base part configured to supply electric energy to the utensil part through a cordless electric connector, the cordless electric connector realizing an electric connection when the utensil part is placed on the base part regardless of a relative angle relation between the utensil part and the base part, the base part comprising an electronic control device configured to control the electric heater; and
a signal electric connection configured to transmit a temperature measured by the temperature measuring device to the electronic control device in the base part, so as to make the electronic control device operate in response to a measured value; wherein the signal electric connection and the cordless electric connector configured to transmit the electric energy to the electric heater are separate components.

2. The cordless liquid heating apparatus according to claim 1, wherein the utensil part comprises a cordless upper connector for signal transmission, the base part comprises a cordless lower connector for signal transmission, and the cordless upper connector for signal transmission and the cordless lower connector for signal transmission define the signal electric connection.

3. The cordless liquid heating apparatus according to claim 1, wherein the utensil part comprises a cordless upper connector, the base part comprises a cordless lower connector, and the cordless upper connector and the cordless lower connector define the cordless electric connector.

4. The cordless liquid heating apparatus according to claim 1, wherein the utensil part is rotatable relative to the base part when the utensil part is placed on the base part.

5. The cordless liquid heating apparatus according to claim 1, wherein the electric heater is a heating tube or a thick film heater.

6. The cordless liquid heating apparatus according to claim 1, wherein the utensil part further comprises a power adjusting device connected to the electric heater.

7. The cordless liquid heating apparatus according to claim 6, wherein the power adjusting device is a triac.

8. The cordless liquid heating apparatus according to claim 1, wherein the base part further comprises a user interface connected to the electronic control device.

9. The cordless liquid heating apparatus according to any one of claims 2 to 8, wherein the cordless upper connector for signal transmission comprises a first conductive part and a second conductive part, the temperature measuring device is electrically connected to the first conductive part and the second conductive part through circuits separately, the cordless lower connector for signal transmission comprises a third conductive part fitted with the first conductive part and a fourth conductive part fitted with the second conductive part, the first conductive part and the third conductive part are fitted in a form of a protrusion and a groove, and the second conductive part and the fourth conductive part are fitted in a form of a protrusion and a groove.

10. The cordless liquid heating apparatus according to any one of claims 3 to 8, wherein the cordless upper connector comprises three upper conductive parts, and the cordless lower connector comprises three lower conductive parts fitted with the three upper conductive parts in one-to-one correspondence.

11. The clamping device according to claim 1, wherein the temperature measuring device is a temperature transducer.
